# EUROPÄISCHE PATENTSCHRIFT

(11) **EP 0 374 523 B1**
(45) Veröffentlichungstag und Bekanntmachung des Hinweises auf die Patenterteilung: **24.02.1993**
(21) Anmeldenummer: 89121742.4
(22) Anmeldetag: 24.11.1989
(51) Int. Cl.: F16N 29/04, F16N 7/38

(54) **Kontrollverfahren an Maschinenaggregaten mit Zentralschmierung**
Method for monitoring centrally lubricated machine sets
Procédé de contrôle pour groupes de machines avec graissage central

(30) Priorität: 23.12.1988 DE 3843498
(43) Veröffentlichungstag der Anmeldung: 27.06.1990
(73) Patentinhaber: Heidelberger Druckmaschinen Aktiengesellschaft, D-69019 Heidelberg (DE)
(72) Erfinder: Krambs, Werner, D-6915 Dossenheim (DE)
(74) Vertreter: Stoltenberg, Heinz-Herbert Baldo

(56) Entgegenhaltungen:
- FR-A- 1 273 639
- FR-A- 1 437 723
- GB-A- 2 194 333
- US-A- 3 782 501
- PATENT ABSTRACTS OF JAPAN vol. 8, no. 132 (M-303)(1569) 20 Juni 1984, & JP-A-59 32604 (TOKYO SHIBAURA DENKI K.K) 22 Februar 1984,

## Beschreibung

Die Erfindung bezieht sich auf ein Kontrollverfahren an Maschinenaggregaten mit Zentralschmierung nach dem Oberbegriff von Anspruch 1, bei denen es sich beispielsweise um Druckwerke von Rotationsdruckmaschinen handeln kann. Bei derartigen Maschinenaggregaten sind eine Vielzahl von Lagerstellen, Zahneingriffen, Kurvengetriebe und dergleichen vorhanden, die während des Maschinenlaufs nach einem individuellen Schmierplan mit der benötigten Menge Schmieröl versorgt werden. Durch die gezielte Versorgung der einzelnen Schmierstellen muß nur eine relativ geringe Menge Schmieröl den sich bewegenden Teilen zugeführt werden.

Normalerweise ist das Angebot an Schmiermittel immer um ein geringes Maß größer als der Bedarf, wobei es sich je nach Schmierstelle um wenige Tropfen von Schmieröl handeln kann. Diese geringe Menge an Ölüberangebot tropft oder fließt nun von den einzelnen Schmierstellen ab und wird in Ölrinnen oder sonstigen Ölauffangbehältern aufgefangen. Nachdem aber bei bestimmten Maschinenaggregaten, z.B. bei Druckwerken, eine Kühlung von walzen im Farbwerk vorgesehen sein kann, ist es nicht auszuschließen, daß an den Zuführleitungen für das Kühlmittel Leckverluste auftreten. Wird als Kühlmittel Wasser benutzt, so ist nicht mit Sicherheit auszuschließen, daß z.B. an einer Drehkupplung für die Kühlmittelzufuhr nach einer größeren Laufzeit der Maschine wenige Tropfen Wasser austreten. Diese gelangen, soweit sie nicht verdunsten können, in Tropfenform in das abfließende, bzw. abtropfende Schmieröl und werden gemeinsam mit diesem gesammelt.

Es besteht nun die Gefahr, daß beim Einfüllen des aufgefangenen Öls in den Vorratsbehälter der Zentralschmierung auch die wassertropfen einer Schmierstelle zugeführt werden. In diesem Falle kann das zu schmierende Maschinenteil durch das zugeführte Wasser während des Maschinenbetriebs beschädigt werden. Bisher konnte dies nur mit Sicherheit vermieden werden, wenn das aufgefangene Öl entweder gereinigt oder als Altöl entfernt wurde. Diese Ölverluste, die sich auch durch Ölmangel in der Zentralschmierung bemerkbar machen können, oder die Reinigung des Öls stellen einen erheblichen Kostenfaktor für den Betrieb einer Maschine dar.

Eine bekannte Ausführung gemäß US-A-37 82 501 zeigt einen Ölsammelbehälter, dem ein kleiner Ölbehälter aufgesetzt ist. In dem kleinen Ölbehälter werden durch einen Magneten Metallteile aus dem Öl ausgesondert. Weiterhin ist durch die GB-A-21 94 333 eine Einrichtung bekannt, bei der durch Lichtstrahlen eine Flüssigkeit, z. B. Wasser, in einer zweiten Flüssigkeit, z. B. Öl, erkannt werden kann.

Ausgehend von diesen Gegebenheiten ist es die Aufgabe vorliegender Erfindung, das von den Schmierstellen aufgefangene, durch die Zentralschmierung dem Ölsammelbehälter zugeführte Öl auf einen Wasseranteil zu kontrollieren und nur Öl ohne wasseranteil einer Wiederverwendung zuzuführen.

Die Lösung der gestellten Aufgabe ist dadurch gekennzeichnet, daß der kleine ölbehälter in dem Ölsammelbehälter angeordnet ist, daß in dem kleineren Ölbehälter ein Sensor vorgesehen ist, der beim Auftreten von Wasser im zugeleiteten Öl ein Signal abgibt, und daß das in den Ölsammelbehälter übergelaufene Öl von einer Pumpe der zentralen Ölversorgung zugeführt wird.

Die Einleitung des Öls zunächst in einen kleineren Ölbehälter, in dem ein Sensor vorgesehen ist, hat den Vorteil, daß beim Auftreten von Wasser im Schmieröl ein Signal abgegeben wird, so daß dieses nicht der zentralen Ölversorgung zur weiteren Verwendung zugeleitet wird. Nach dieser Zwischenkontrolle wird gemäß der Erfindung weiterhin das im Ölsammelbehälter gesammelte Öl über eine Pumpe dem Ölbehälter der Zentralschmierung zugeführt, so daß dieses gefahrlos für die Versorgung von Schmierstellen benutzt werden kann.

Anspruch 2 kennzeichnet ein Maschinenaggregat zur Durchführung des Verfahrens nach Anspruch 1. Die Unteransprüche kennzeichnen vorteilhafte Ausgestaltungen der Erfindung. So wird durch das herausnehmbare Einhängen des kleinen Ölbehälters in dem Ölsammelbehälter beim Auftreten von Wasser im Schmieröl nur eine kleine Menge Öl der Altölverwertung zugeführt werden müssen. Nachdem sich das Wasser im unteren Teil des kleineren Ölbehälters sammelt und durch die Schwerkraft das Öl immer auf dem Wasser schwimmt, wird gewährleistet, daß kein Wasser aus dem kleineren Ölbehälter austreten kann.

Durch das von dem Sensor im kleineren Ölbehälter abgegebene Signal kann vorteilhaft die Pumpe blockiert werden, so daß aus dem Ölsammelbehälter der Zentralschmierung kein Öl mehr zugeleitet wird und außerdem kann ein Warnsignal für die Bedienungsperson erzeugt werden, so daß die Leckstelle in der Kühlmittelleitung abgedichtet werden kann. Durch den in dem Ölsammelbehälter vorgesehene Schwimmer ist es möglich, die Pumpe nur dann für kurze Zeit einzuschalten, wenn der Ölstand in dem Ölsammelbehälter eine bestimmte Höchstmarke erreicht hat.

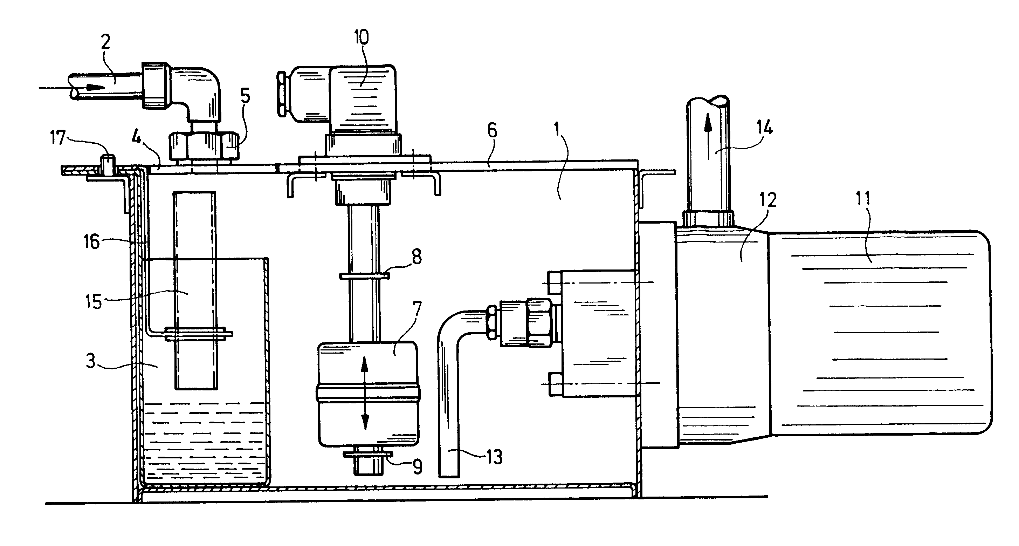

Ein Ausführungsbeispiel der Erfindung ist in der Zeichnung schematisch dargestellt.

Der Ölsammelbehälter 1 ist beispielsweise auf der Bedienseite einer Rotationsdruckmaschine im Bereich der Druckwerke vorgesehen und erhält über die Verbindungsleitung 2 das aus den Lagerstellen entweichende Schmieröl zugeführt. Im gezeigten Ausführungsbeispiel ist innerhalb des Ölsammelbehälters 1 ein kleinerer Ölbehälter 3 vorgesehen, in den das über die Verbindungsleitung 2 zugeführte Öl einläuft. Der kleine Ölbehälter 3 ist aus dem Ölsammelbehälter 1 herausnehmbar, wofür ein Deckel 4 vorgesehen ist, an dem die Verbindungsleitung 2 über eine Muffe 5 befestigt ist. Nach Entfernen des Deckels 4 mit der Verbindungsleitung 2 kann der kleinere Ölbehälter 3 entnommen werden, um z.B. eine Reinigung desselben durchzuführen.

Das über die Verbindungsleitung 2 zugeführte Öl füllt nun den kleinen Ölbehälter 3, bis dieser überläuft, wobei das übergelaufene Öl von dem Ölsammelbehälter 1 aufgefangen wird. In der Abdeckung 6 des Ölsammelbehälters 1 ist ein Schwimmer 7 gelagert, der eine obere Schaltstellung 8 und eine untere Schaltstellung 9 aufweist. Steigt das Öl in dem Ölsammelbehälter 1, so wird bei Berührung des Schwimmers 7 mit der oberen Schaltstellung 8 ein elektrisches Signal erzeugt, das über eine Signalableitung 10 einer Steuerstelle zugeführt wird. Diese Steuerstelle schaltet einen Motor 11 ein, der eine Pumpe 12 antreibt, die über eine Saugleitung 13 das Öl aus dem Ölsammelbehälter solange abpumpt, bis der Schwimmer 7 die untere Schaltstellung 9 berührt und somit über ein weiteres Signal der Motor 11 abgeschaltet wird. Über die Verbindungsleitung 14 wird das abgepumpte Öl einer zentralen Ölversorgung zugeleitet.

Sollte in dem über die Verbindungsleitung 2 zugeführten Schmieröl ein Wasseranteil enthalten sein, der z.B. durch eine Leckstelle in einer Kühlwasserleitung entstehen könnte, so sammelt sich das Wasser im unteren Bereich des Ölbehälters 3 an. Handelt es sich hierbei um wenige Wassertropfen, so können diese über längere Zeit in dem Ölbehälter 3 verbleiben, ohne daß eine Beeinträchtigung der Anlage erfolgt. Steigt jedoch die Wassermenge in dem Ölbehälter 3 an, so wird bei Erreichen eines bestimmten Wasserstandes über einen Sensor 15 ein Signal erzeugt, das das Einschalten der Pumpe 11 blockiert und gleichzeitig ein Warnsignal z.B. im Bereich der Maschinenbedienung erzeugt, so daß der Drucker den Schaden an der Wasserversorgung feststellen und beheben kann und nach Entleeren des kleinen Ölbehälters 3 die Anlage ihre Funktion wieder übernimmt.

Der Sensor 15 kann an einem Halter 16 befestigt sein, der wiederum über einen Zapfen 17 am Ölstandsbehälter 1 angeordnet ist und in den der Halter 16 mit dem Sensor 15 einzuhängen ist. Hiermit kann der Sensor 15 leicht entnommen werden, um ihn z.B. zu reinigen.
- 1: Ölsammelbehälter
- 2: Verbindungsleitung
- 3: Ölbehälter
- 4: Deckel
- 5: Muffe
- 6: Abdeckung
- 7: Schwimmer
- 8: Schaltstellung
- 9: Schaltstellung
- 10: Signalabteilung
- 11: Motor
- 12: Pumpe
- 13: Saugleitung
- 14: Verbindungsleitung
- 15: Sensor
- 16: Halter
- 17: Zapfen

## Patentansprüche

1. Kontrollverfahren an Maschinenaggregaten mit Zentralschmierung , bei dem das von einer zentralen Ölversorgung zugeführte und aus den Lagerstellen entweichende Schmieröl an den Maschinenaggregaten aufgefangen und über Verbindungsleitungen (2) einem Ölsammelbehälter (1) zugeleitet wird, und das über die Verbindungsleitungen dem Ölsammelbehälter (1) zugeleitete Öl zunächst in einen kleineren Ölbehälter (3) geleitet wird, nach dessen Füllung es in den Ölsammelbehälter (1) überläuft,
**dadurch gekennzeichnet,**
daß der kleinere ölbehälter (3) in dem Ölsammelbehälter angeordnet ist,
daß in dem kleineren Ölbehälter (3) ein Sensor (15) vorgesehen ist, der beim Auftreten von Wasser im zugeleiteten Öl ein Signal abgibt,
und daß das in den Ölsammelbehälter (1) übergelaufene Öl der zentralen Ölversorgung über eine Verbindungsleitung (14) zugeführt wird.

2. Maschinenaggregate mit Zentralschmierung zur Durchführung des Kontrollverfahrens nach Anspruch 1, mit einem zentralen Ölsammelbehälter, dem ein kleinerer Ölbehälter (3) für die Ölzuleitung zugeordnet ist,
**dadurch gekennzeichnet,**
daß der kleinere Ölbehälter (3) in dem Ölsammelbehälter (1) herausnehmbar eingehängt ist, daß in dem kleineren Ölbehälter (3) ein Sensor (15) zur wassererkennung vorgesehen ist, der beim Erreichen eines bestimmten Wasserstandes ein Signal abgibt, und daß dem Ölsammelbehälter (1) eine Pumpe (12) zugeordnet ist, die das übergelaufene Öl in die zentrale Ölversorgung pumpt.

3. Maschinenaggregate nach Anspruch 2,
**dadurch gekennzeichnet,**
daß das Signal des Sensors (15) das Einschalten der Pumpe (12) blockiert und gleichzeitig ein Warnsignal für die Bedienungsperson erzeugt.

4. Maschinenaggregate nach Anspruch 2,
**dadurch gekennzeichnet,**
daß in dem Ölsammelbehälter (1) ein Schwimmer (7) vorgesehen ist, der bei bestimmtem Ölstand die Pumpe (12) einschaltet.

## Claims

1. Method of monitoring applied on machine assemblies having a central lubrication system, method in which the lubricating oil supplied by a central oil-supply system and escaping from the bearing points is collected at the machine assemblies and, via connecting lines (2), fed to an oil-collecting tank (1), and in which the oil fed to said oil-collecting tank (1) via said connecting lines is first fed to a smaller oil tank (3) overflowing into said oil-collecting tank (1) when said smaller oil tank is filled,
characterized in
that said smaller tank (3) is accomodated in said oil-collecting tank, that a sensor (15) generating a signal upon the occurrence of water in the fed oil is provided in said smaller oil tank (3), and in that, via a connecting line (14), the oil which has overflowed into said oil-collecting tank (1) is fed to said central oil supply system.

2. Machine assemblies having a central lubrication system - for applying said monitoring method according to Claim 1 -, comprising a central oil-collecting tank to which, for the purpose of oil feeding, a smaller tank (3) is assigned,
characterized in
that said smaller oil tank (3) is removably suspended from said oil-collecting tank (1), in that a water-detecting sensor (15) generating a signal when a defined water level is reached is provided in said smaller oil tank (3), and in that a pump (12) pumping the oil overflow into the central oil supply system is assigned to said oil-collecting tank (1).

3. Machine assembly according to Claim 2,
characterized in
that the signal generated by said sensor (15) disables the switching-on of said pump (12) and simultaneously generates a warning signal for the machine operator.

4. Machine assembly according to Claim 2,
characterized in
that a float (7) switching on said pump (12) when a defined level of oil has been reached is provided in said oil-collecting tank (1).

## Revendications

1. Procédé de contrôle de groupes de machine à lubrification centrale, suivant lequel l'huile de lubrification envoyée par une alimentation centrale en huile et s'échappant de paliers est recueillie dans les groupes de machine et dirigée par des conduits de raccord (2) dans un récipient collecteur d'huile (1) et l'huile renvoyée par les conduits de raccord dans le récipient collecteur d'huile (1) est tout d'abord dirigée dans un petit récipient à huile (3) à la fin du remplissage duquel elle déborde dans le récipient collecteur d'huile (1), caractérisé en ce que le petit récipient à huile (3) est disposé dans le récipient collecteur d'huile, en ce qu'un détecteur (15) qui émet un signal en cas d'apparition d'eau dans l'huile introduite est prévu dans le petit récipient à huile (3) et en ce que l'huile ayant débordé dans le récipient collecteur d'huile (1) est envoyée par un conduit de raccord (14) à l'alimentation centrale en huile.

2. Groupes de machine comprenant une lubrification centrale, pour la mise en oeuvre du procédé de contrôle selon la revendication 1, comprenant un récipient collecteur central d'huile auquel est associé un petit récipient à huile (3) pour l'admission d'huile, caractérisés en ce que le petit récipient à huile (3) est suspendu dans le récipient collecteur d'huile (1) de manière à pouvoir en être enlevé, en ce qu'un détecteur (15), qui est prévu dans le petit récipient à huile (3) pour déceler l'eau, émet un signal lorsque l'eau atteint un niveau déterminé et en ce qu'une pompe (12) associée au récipient collecteur d'huile (1) pompe l'huile ayant débordé pour l'envoyer à l'alimentation centrale en huile.

3. Groupes de machine selon la revendication 2, caractérisés en ce que le signal du détecteur (15) bloque l'enclenchement de la pompe (12) et émet simultanément un signal d'avertissement pour la personne de service.

4. Groupes de machine selon la revendication 2, caractérisés en ce qu'un flotteur (7), qui enclenche la pompe (12) lorsque l'huile atteint un niveau déterminé, est prévu dans le récipient collecteur d'huile (1).
